# EUROPÄISCHE PATENTSCHRIFT

(11) **EP 3 585 509 B1**
(45) Veröffentlichungstag und Bekanntmachung des Hinweises auf die Patenterteilung: **20.10.2021**
(21) Anmeldenummer: 18712799.8
(22) Anmeldetag: 23.02.2018
(51) Int. Cl.: B01J 8/02, F28F 9/16, F28F 13/08, F28D 7/02, F28D 7/08, B01J 8/06, F28D 21/00

(54) **WÄRMEÜBERTRAGER UND REAKTOR**
HEAT EXCHANGER AND REACTOR
ÉCHANGEUR DE CHALEUR ET RÉACTEUR

(30) Priorität: 24.02.2017 DE 102017203058
(43) Veröffentlichungstag der Anmeldung: 01.01.2020
(73) Patentinhaber: Fraunhofer-Gesellschaft zur Förderung der angewandten Forschung e.V., 80686 München (DE)
(72) Erfinder: HOFMANN, Christian, 55118 Mainz (DE); PENNEMANN, Helmut, 80686 München (DE)
(74) Vertreter: WSL Patentanwälte Partnerschaft mbB
(86) Internationale Anmeldenummer: PCT/EP2018/054542
(87) Internationale Veröffentlichungsnummer: WO 2018/154063

(56) Entgegenhaltungen:
- EP-A1- 1 563 900
- WO-A1-2005/073657
- WO-A1-2008/058734
- WO-A1-2008/068156
- WO-A1-2013/158916
- WO-A1-2016/003754
- WO-A2-2011/008921
- CN-A- 108 351 175
- CN-U- 202 747 831
- DE-C- 855 258
- KR-A- 20120 125 658
- US-A- 2 185 930
- US-A1- 2004 184 976
- US-A1- 2007 178 029
- US-A1- 2016 061 381
- US-A1- 2016 129 417

## Beschreibung

Die vorliegende Erfindung betrifft einen Wärmeübertrager, dessen Verwendung als Reaktor sowie einen Reaktor mit einem Wärmeübertrager.

Das Grundprinzip von Wärmeübertragern besteht darin, dass Wärmeenergie von einem ersten Medienstrom auf einen zweiten Medienstrom übertragen wird. Die beiden Medienströme stehen dabei nicht in fluidischer Verbindung, sodass eine Vermischung nicht erfolgt.

Bei mehreren Bauformen ist ein Gehäuse vorgesehen, durch das ein erstes Medium strömt. In dem Gehäuse sind eine oder mehrere Leitungen angeordnet, in denen ein zweites Medium strömt. Die Medien werden dabei durch die Wandung der Leitung voneinander getrennt. Die Wandung ermöglicht jedoch eine Wärmeübertragung.

Wärmeübertrager werden hinsichtlich der Strömungsrichtung der Medienströme in Gleichstrom-, Gegenstrom- und Kreuzstromwärmeübertrager unterteilt. Gleichstrom bedeutet, dass die Medien im Wesentlichen parallel zueinander in die gleiche Richtung strömen. Bei Gegenstrom verlaufen die Medien im Wesentlichen parallel, aber in entgegengesetzter Richtung. Der Begriff Kreuzstrom wird verwendet, wenn die Medienströme über Kreuz strömen, insbesondere in einem Winkel von 90°.

Aus dem Stand der Technik sind auch Reaktoren bekannt, die einen Wärmeübertrager aufweisen. Unter einem Reaktor wird ein Behälter verstanden, in dem bei bestimmungsgemäßem Gebrauch eine Reaktion, insbesondere eine chemische oder biochemische Reaktion, stattfindet.

Reaktoren kommen beispielsweise bei der Herstellung von Methanol (CH₃OH) zur Anwendung. Dort werden einem Reaktor Kohlenstoffmonoxid (CO) und Wasserstoff (H₂) zugeführt, die in dem Reaktor miteinander reagieren. Hierbei kommt ein Katalysator zum Einsatz, der die Reaktionsgeschwindigkeit erhöht. Die Reaktion ist exotherm, weshalb eine Abführung von Wärmeenergie erforderlich ist.

Aus der EP 1 048 343 A2 ist ein Wärmetauscher-Reaktor bekannt, der für die Herstellung von Methanol verwendet werden kann und eine Mehrzahl von geraden Leitungen aufweist, in denen ein Katalysator angeordnet ist. Die Leitungen sind in einem Gehäuse angeordnet, durch das ein erstes Medium strömt und dabei die Leitungen umspült, und münden endseitig in einen Sammel- und einen bezüglich des Gehäuses gegenüberliegenden Verteilerraum. Durch die Leitungen strömt ein zweites Medium, das aus den Ausgangsstoffen und Endprodukten der chemischen Reaktion besteht. Die Reaktion findet in den Leitungen statt. Aufgrund der exothermen Reaktion entsteht ein Temperaturgefälle von den Leitungen zur Gehäusewand. Die Leitungen dehnen sich deshalb stärker aus als die Gehäusewand, weshalb sie durch jeweils einen Faltenbalg mit dem Gehäuse verbunden werden. Das zweite Medium überträgt Wärmeenergie an das erste Medium, die mit dem ersten Medium aus dem Gehäuse transportiert wird.

Die Verwendungen von Faltenbälgen ist verarbeitungstechnisch aufwändig und erhöht die Kosten der Vorrichtung. Zusätzlich sind Faltenbälge verschleißanfällig, was ebenfalls nachteilig ist.

Die WO 2013/004254 A1 schlägt vor, die Leitungen in Längsrichtung verschiebbar an dem Gehäuse anzuordnen ohne einen Faltenbalg vorzusehen. Dadurch wird zwar die Verwendung eines Faltenbalgs vermieden, die Anordnung erfordert jedoch eine aufwändige Abdichtung zwischen Leitung und Gehäuse.

Die US 2,751,761 offenbart eine Wärmepumpe mit einem Kessel, in dem eine einzelne Leitung helixartig verläuft. Der Kessel und die Leitung bilden jeweils ein von einem Medium durchströmbares Volumen, wobei die Volumina nicht miteinander in Verbindung stehen. Der Kessel wird von Wasser durchströmt, das durch einen Temperaturunterschied zu dem in der Leitung strömenden Medium wahlweise erhitzt oder abgekühlt wird.

Aus der US 4,858,584 geht eine Vorrichtung zum Vorwärmen von Kraftstoff für Verbrennungsmotoren hervor. Die Vorrichtung weist ein stabförmiges Gehäuse und eine darin befindliche, helixförmig verlaufende Leitung auf. Das Gehäuse weist an einem Ende einen Einlass und an dem anderen Ende einen Auslass auf, die jeweils tangential angeordnet sind.

Die US 5,379,832 zeigt einen Wärmetauscher, der ebenfalls ein Gehäuse aufweist, in dem jedoch zwei Leitungen angeordnet sind. Zur Herstellung der zwei Leitungen wird jeweils ein gerades Rohr um einen Kern gewickelt, wodurch die Leitungen eine helixähnliche Form erhalten. Die beiden Leitungen können anschließend auf verschiedene Arten und Weisen ineinander verschränkt angeordnet werden.

Aus der EP 1 563 900 A1 ist ein Reaktor mit einem Gehäuse und mehreren schleifenförmigen Wärmetauscheleitungen in dessen Inneren bekannt. Jede der Wärmetauscherleitungen wird aus einem einzelnen Rohr gebildet. Diese sind einlassseitig an eine ringförmigen Verteilerleitung angeschlossen, in die eine Zuführleitung mündet, die den oberen Boden des Reaktorgehäuses durchquerend nach außen geführt ist. Auf der Auslasseite münden die Wärmetauscherleitungen in eine ringförmige Sammelleitung, von der aus eine Abführungsleitung sich durch den unteren Boden des Reaktorgehäuses hindurch erstreckend nach außen geführt ist

Die WO 2013/158916 A1 offenbart einen Rohrbündelwärmetauscher mit einem Gehäuse in Form eines Quadratrohres, welches beidseits jeweils mechanisch mit einer Stirnwand verbunden ist. Zwischen den Strinwänden verlaufen helixförmig miteinander verwundene Leitungsbündel, wobei die einzelnen Leitungen mit Öffnungen in den Stirnwänden fluchtend mit diesen mechanisch verbunden sind.

Aus der WO 2016/003754 A1 ist ein Wärmetauscher mit einem quaderförmigen Gehäuse bekannt, in dessen inneren eine Vielzahl von Lagen einer welleförmigen Struktur und dazwischen angeordneten, jeweils eine solche Strukturlage helixförmig umwickelnden Fluidleitungen angeordnet sind. Die einzelnen Fluidleitungen münden in zwei von vier Eckpfosten des Gehäuses, mit denen sie fluiddicht verbunden sind und durch die das Fluid aus dem Gehäuse herausgeführt wird. Auf der Oberseite der Eckpfosten, außerhalb des Gehäuses sind Fluidanschlüsse vorgesehen. Bei einem anderen Beispiel ist eine Lage der welleförmigen Struktur zu einem Zylinder gerollt. Um diese sind drei Fluidleitungen helixförmig herumwickelt. Das so gebildete Paket wird in einen zylindrischen Abschnitt eines flaschenförmigen Gehäuses eingesetzt. Die Fluidleitungen führen durch eine Öffnung in der Gehäusewand und münden in einen gemeinsamen Fluidverbinder, der an der Außenseite des Gehäuses fluiddicht angebracht ist. Ein weiteres Beispiel zeigt eine alternative Anordnung ohne Verwendung einer welleförmigen Struktur, bei der vier helixförmig gewundene Fluidleitungen ineinander verschränkt in einem Gehäuse angeordnet sind und mit der gleichen Durchführung wie im Beispiel zuvor aus diesem Gehäuse herausgeführt werden.

Die WO 211/008921 A2 hat einen Rohrbündelwärmetauscher mit einem Mantelrohr und mit Bündeln helixförmig umeinander gewundener Leitungen zum Gegenstand. Das Mantelrohr ist beidseits mit einer Platte verschlossen. Die Leitungen sind extrudierte oder gezogene Rohre, die mit Öffnungen in den Platten fluchtend mit diesen vorzugsweise mittels Reibrührschweißen verbunden sind.

Aus der WO 2008/058734 A1 ist ein Wärmeübertrager mit einem Gehäuse bekannt, welches stirnseitig jeweils mit einem Bodenelement abgeschlossen ist. Zwischen den Bodenelementen erstrecken sich Strömungskanäle in Form von gewellten Rohren, die als Strangpressprofile ausgeführt sind.

Die US 2007/178029 A1 befasst sich abermals mit einem Rohrbündelwärmetauscher mit einem Mantelrohr und darin angeordneten helixförmigen Leitungen, die einen nicht-kreisförmigen Querschnitt aufweisen. Die Leitungen verlaufen innerhalb des Mantelrohrs von einer unteren zu einer oberen Rohrplatte, die den Mantelrohrraum an seinen axialen Enden abschließen.

Die CN 108 351 175 A hat einen Wärmetauscher zum Gegenstand, der mittels additiver Fertigung hergestellt sein kann. Sämtliche Kanäle verlaufen innerhalb des Wärmetauschers entweder durchgehend gerade oder bogenförmig nach radial auswärts aufgeweitet und auf einem mittigen Abschnitt gerade. Die Bogenform ist der Querschnittsvergrößerung des Wärmetauschergehäuses zwecks Vergrößerung der Oberfläche der einzelnen Leitungswandungen geschuldet.

Die US 2016/129417 A1 befasst sich mit der monolithisch gefertigten Mikrokanalstruktur eines Mikroreaktors, welche beispielsweise mittels additiver Fertigung hergestellt sein kann. Die Kanalstruktur wird von einem Matrixmaterial umgeben, welches nachträglich oder simultan mit der Kanalstruktur aufgebaut werden kann und welches die Kanalstruktur berührend umgibt.

Die Schrift KR 2012 0125658 A betrifft einen Wärmetauscher aus mehreren Komponenten, die aus thermoplastischem Material gefertigt sind, und befasst sich mit einem Verfahren diese Komponenten stoffschlüssig miteinander zu verbinden. Konkreten werden Leitungen aus einem Verbundmaterial aus koextrudierten thermoplastischen Materialien mit unterschiedlichen Schmelzpunkten gefertigt und an den Enden mittels einem thermoplastischen Bindeharz in ein Gehäuse eingegossen.

Aus der US 2016/061381 A1 ist wiederum die Nutzung additiver Fertigungstechniken und insbesondere des 3D-Drucks zur Herstellung von Druckbehältern bekannt.

Es ist daher Aufgabe der Erfindung, einen Wärmeübertrager bereitzustellen, der eine verbesserte Ausgleichsmöglichkeit für die unterschiedliche thermische Ausdehnung von Gehäuse und Leitungen aufweist.

Diese Aufgabe wird mit einem Wärmeübertrager gemäß Anspruch 1 gelöst.

Der Wärmeübertrager weist ein Gehäuse und zumindest eine Leitung auf. Das Gehäuse definiert ein erstes Volumen und die zumindest eine Leitung definiert ein zweites Volumen. Das Gehäuse weist einen Einlass und einen Auslass sowie zumindest eine erste Öffnung und zumindest eine der ersten Öffnung bezüglich des Gehäuses gegenüberliegende zweite Öffnung auf. Die zumindest eine Leitung verläuft durch das erste Volumen und verbindet die zumindest eine erste Öffnung des Gehäuses mit der zumindest einen zweiten Öffnung des Gehäuses, wobei sie an ihren beiden Enden mit dem Gehäuse fluiddicht verbunden ist. Das erste Volumen und das zweite Volumen weisen daher keine fluidische Verbindung auf, so dass eine Vermischung des ersten Mediums und des zweiten Mediums verhindert wird.

Die zumindest eine Leitung innerhalb des ersten Volumens verläuft nicht linear und die zumindest eine Leitung im Bereich ihrer ersten Öffnung und/oder ihrer zweiten Öffnung ist mit dem Gehäuse monolithisch verbunden, wobei die monolithisch ausgebildeten Elemente mittels additiver Fertigung hergestellt sind. Die zumindest eine Leitung verläuft zumindest teilweise wellenförmig und/oder helixförmig und/oder zickzackförmig.

Das Gehäuse des erfindungsgemäßen Wärmeübertragers ist vom Einlass zum Auslass von einem ersten Medium durchströmbar. Dessen zumindest eine Leitung ist von der ersten Öffnung zur zweiten Öffnung oder in umgekehrter Richtung von einem zweiten Medium durchströmbar. Bei bestimmungsgemäßem Gebrauch findet ein Übertrag von Wärmeenergie von dem ersten Medium auf das zweite Medium oder umgekehrt statt. Durch den nicht linearen Verlauf wird eine Verformung der zumindest einen Leitung ohne einen das Material der Leitungen, des Gehäuses oder deren Verbindung gefährdenden Spannungsaufbau ermöglicht. Kommt es bei bestimmungsgemäßem Gebrauch zu einer thermisch bedingten Ausdehnung einer Leitung und/oder des Gehäuses, so wird diese Ausdehnung durch eine Verformung der Leitung kompensiert. Die Leitung bildet somit zugleich das Dehnungs- oder Ausgleichselement, so dass kein zusätzliches Ausgleichselement wie beispielsweise ein Faltenbalg benötigt wird.

Die monolithische Verbindung ist hinsichtlich der Abdichtung zwischen erstem und zweitem Volumen vorteilhaft, da keine separaten Dichtelemente und/oder Materialien benötigt werden.

Vorzugsweise ist jeder Leitung genau eine erste Öffnung und genau eine zweite Öffnung zugeordnet und jeder ersten Öffnung sowie jeder zweiten Öffnung genau eine Leitung zugeordnet. Das zweite Medium strömt dann von einem Bereich außerhalb des Gehäuses durch die erste Öffnung oder die zweite Öffnung in die zugeordnete Leitung, durchströmt diese Leitung und verlässt das zweite Volumen durch die jeweils andere Öffnung in einen Bereich außerhalb des ersten Volumens.

Bevorzugt ist auch der Einlass bezüglich des Gehäuses gegenüberliegend zu dem Auslass angeordnet. Das Gehäuse umfasst insbesondere sämtliche Wandungen oder Wandungsabschnitte, die das erste Volumen begrenzen sowie den Einlass und den Auslass.

Bei vorteilhaften Weiterbildungen ist vorgesehen, dass gedachte Verbindungsgeraden zwischen der zumindest einen ersten Öffnung und der zumindest einen zweiten Öffnung einerseits und zwischen Einlass und Auslass andererseits im Wesentlichen parallel sind. Unter im Wesentlichen parallel werden auch noch solche Anordnungen verstanden, bei denen die Verbindungsgeraden einen Winkel von <50°, insbesondere <20° einschließen. Die im Wesentlichen parallele Anordnung der Verbindungsgeraden führt dazu, dass das erste Medium und das zweite Medium in Gleichströmung oder Gegenströmung strömen. Dadurch wird eine gleichmäßige Übertragung von Wärmeenergie sichergestellt.

Als "Hauptströmungsrichtung" einer Leitung wird eine Richtung entlang der Verbindungsgeraden zwischen der ersten und der zweiten der Leitung zugeordneten Öffnung bezeichnet. Besonders bevorzugt verläuft die Leitung so, dass die Strömung in der Leitung an keiner Stelle eine Komponente entgegen der Hauptströmungsrichtung aufweist. Dadurch findet kein Wechsel zwischen Gleich- und Gegenströmung bezogen auf das in der Leitung strömende zweite Medium einerseits und das die Leitung umgebende erste Medium andererseits statt. Dies führt zu einer gleichmäßigen, kontrollierten Übertragung der Wärmeenergie von dem einen Medium auf das andere, indem ein Temperaturgradient in dem ersten Medium quer zur Hauptströmungsrichtung vermieden wird.

Bei einer vorteilhaften Weiterbildung ist vorgesehen, dass das Gehäuse eine Längsachse L aufweist und durch eine senkrecht zu der Längsachse L liegende gedachte Fläche A in ein erstes Gehäuseteil und ein zweites Gehäuseteil unterteilt ist. Die Gehäuseteile müssen dabei keine separaten Bauteile sein. Der Einlass und die zumindest eine erste Öffnung sind in dem ersten Gehäuseteil und der Auslass und die zumindest eine zweite Öffnung sind in dem zweiten Gehäuseteil angeordnet. Auf diese Weise sind die zumindest eine erste Öffnung und die zumindest eine zweite Öffnung bezüglich des Gehäuses gegenüberliegend angeordnet. Ebenso sind der Einlass und der Auslass bezüglich des Gehäuses gegenüberliegend angeordnet.

Bevorzugt sind die zumindest eine erste Öffnung und die zumindest eine zweite Öffnung bezogen auf einen Gehäuse- und/oder Volumenmittelpunkt gegenüberliegend angeordnet. Besonders bevorzugt verläuft eine gedachte Verbindungsgerade zwischen der ersten einer Leitung zugeordneten Öffnung und der zumindest einen zweiten derselben Leitung zugeordneten Öffnung durch den Gehäuse- und/oder Volumenmittelpunkt.

Weiterhin bevorzugt sind auch der Einlass und der Auslass bezogen auf einen Gehäuse- und/oder Volumenmittelpunkt gegenüberliegend angeordnet. Besonders bevorzugt verläuft eine gedachte Verbindungsgerade zwischen dem Einlass und dem Auslass durch den Gehäuse- und/oder Volumenmittelpunkt.

Bei vorteilhaften Weiterbildungen weist das Gehäuse einen Mittelteil und zwei gegenüberliegende Endstücke auf. Der Mittelteil ist bevorzugt zylindermantelförmig. Diese Form ermöglicht eine drehsymmetrische Anordnung mehrerer Leitungen in dem Gehäuse und eine homogene Strömung des ersten Mediums. Die Endstücke sind bevorzugt rotationssymmetrisch. Zur Vereinfachung der Herstellung sind die Endstücke vorzugsweise identisch.

Besonders bevorzugt ist der Einlass und die zumindest eine erste Öffnung an dem einen Endstück und der Auslass und die zumindest eine zweite Öffnung an dem anderen Endstück angeordnet. Hierdurch ist eine bezüglich des Gehäuses gegenüberliegende Anordnung der zumindest eine erste Öffnung und der zumindest eine zweite Öffnung einerseits und des Einlasses und des Auslasses andererseits realisiert.

Bevorzugt wird eine Mehrzahl von Leitungen vorgesehen, wodurch der Wärmeübertrag in dem ersten Volumen gleichmäßiger und effektiver erfolgt. Durch eine Mehrzahl von Leitungen vergrößert sich die Oberfläche derselben und es kann deshalb insgesamt mehr Wärmeenergie zwischen den Medien übertragen werden. Anders gesagt wird hierdurch die Wärmeübertragungsleistung des Wärmeübertragers erhöht.

Bei besonders vorteilhaften Weiterbildungen ist vorgesehen, dass das Gehäuse eine Längsachse L aufweist und eine Mehrzahl von Leitungen drehsymmetrisch um die Längsachse L des Gehäuses angeordnet ist. Dies ermöglicht eine homogene Verteilung der Leitungen in dem Gehäuse, wodurch ebenfalls ein verbesserter Wärmeübertrag zwischen den Medien ermöglicht wird.

Grundsätzlich kann die zumindest eine Leitung erfindungsgemäß jegliche Form eines nicht-linearen Verlaufes aufweisen. Die zumindest eine Leitung kann insbesondere auch lineare Abschnitte aufweisen, solange nur die Leitung insgesamt auch Richtungswechsel umfasst. Eine Mittellinie einer Leitung kann insbesondere einen zweidimensionalen oder einen dreidimensionalen Verlauf aufweisen.

Erfindungsgemäß verläuft die zumindest eine Leitung zumindest teilweise wellenförmig und/oder helixförmig und/oder zickzackförmig. Insbesondere eine Wellen- oder eine Helixform ermöglichen eine hohe Flexibilität, wodurch auch eine große thermische Ausdehnung einer Leitung oder des Gehäuses ohne nennenswerte Materialspannung ausgeglichen werden kann.

Wird eine Mehrzahl von Leitungen vorgesehen, so können die Leitungen identisch oder unterschiedlich geformt sein. Bevorzugt sind alle Leitungen identisch, wodurch eine gleichmäßige Strömung in allen Leitungen gewährleistet wird.

Bei einer vorteilhaften Weiterbildung der Erfindung ist vorgesehen, dass das Querschnittsprofil der zumindest einen Leitung entlang ihres Verlaufs variiert. Dabei kann sowohl der innere Querschnitt, der von dem zweiten Medium durchströmt wird, als auch die äußere Form der zumindest einen Leitung variieren. Auf diese Weise können in verschiedenen Abschnitten entlang einer Leitung unterschiedliche Strömungsgeschwindigkeiten und/oder unterschiedlich große Kontaktflächen für das erste Medium und/oder das zweite Medium realisiert werden. Dadurch kann beeinflusst werden, wie groß der Wärmeübertrag an unterschiedlichen Abschnitten einer Leitung ist.

Vorteilhafterweise ist bei dem Wärmeübertrager eine Mehrzahl von Leitungen vorgesehen und der Wärmeübertrager weist zumindest einen Sammler und/oder einen Verteiler auf. Mehrere Leitungen stehen dabei mit dem Sammler über ihre jeweils zugeordnete erste Öffnung und/oder mit dem Verteiler über ihre jeweils zugeordnete zweite Öffnung in fluidischer Verbindung. Der Verteiler weist eine Zuführung und/oder der Sammler eine Abführung für das zweite Medium auf. Durch den Verteiler wird die Versorgung der Leitungen mit dem zweiten Medium und durch den Sammler die Entnahme des zweiten Mediums aus den Leitungen vereinfacht, da jeweils nur ein Anschluss (Zuführung und Abführung) notwendig ist.

Besonders bevorzugt ist vorgesehen, dass das Gehäuse eine Längsachse L aufweist und der Sammler und/oder der Verteiler eine Zuführung bzw. eine Abführung aufweist, die tangential zu einem gedachten Kreis um die Längsachse L des Gehäuses angeordnet ist. Der Vorteil dieser Anordnung ist, dass das zweite Medium insbesondere bei einem ansonsten um die Längsachse L drehsymmetrischen Aufbau gleichmäßig auf alle Leitungen verteilt wird. Dennoch werden die zentralen Endabschnitte des Gehäuses nicht verbaut, so dass der Einlass und der Auslass für das erste Medium in das erste Volumen zugleich entlang der Längsachse angeordnet werden kann. Besonders bevorzugt ist die Zuführung und/oder die Abführung tangential zu einer Außenwandung des Sammlers und/oder des Verteilers angeordnet.

Der Wärmeübertrager weist zumindest eine Leitung und ein Gehäuse auf. Das Gehäuse kann einen Mittelteil und zwei Endstücke aufweisen. Außerdem kann das Gehäuse einen Sammler und einen Verteiler aufweisen. Die Leitung und das Gehäuse sind erfindungsgemäß wenigstens im Bereich der ersten und/oder zweiten Öffnung monolithisch miteinander verbunden. Sind der Einlass und die zumindest eine erste Öffnung beispielsweise an dem einen Endstück und der Auslass und die zumindest eine zweite Öffnung an dem anderen Endstück angeordnet, sind bevorzugt die zumindest eine Leitung und die Endstücke monolithisch ausgebildet. Ferner können auch die zumindest eine Leitung, die Endstücke und das Mittelteil oder die zumindest eine Leitung, die Endstücke, das Mittelteil, der Sammler und der Verteiler monolithisch ausgebildet sein. Die monolithische Bauweise ist besonders vorteilhaft für den Wärmeübertrager, da auf diese Weise zusätzliche Materialien vermieden werden, wodurch ein gleichmäßiger Wärmeübertrag ermöglicht wird.

Die monolithisch miteinander verbundenen Elemente bestehen aus einem Stück eines Materials. Werden mehrere Elemente monolithisch ausgebildet und gibt es darüber hinaus weitere Bauteile, so sind die weiteren Bauteile des Wärmeübertragers bevorzugt stoffschlüssig mit den monolithisch ausgebildeten Elementen verbunden. So können insbesondere das Mittelteil und/oder der Sammler und/oder der Verteiler stoffschlüssig mit den monolithisch ausgebildeten Elementen verbunden sein.

Die monolithisch ausgebildeten Elemente sind erfindungsgemäß mittels additiver Fertigung hergestellt.

Der Wärmeübertrager kann einteilig, insbesondere monolithisch, oder mehrteilig ausgebildet sein. Eine einteilige Herstellung, die beispielsweise durch eine stoffschlüssige Verbindung zweier Bauteile erreicht wird, ist in der Regel aufwändiger, bietet jedoch Vorteile hinsichtlich Dichtheit und Stabilität. Monolitisch ist ein Bauteil dann, wenn es vollständig aus einem Stück eines Materials besteht. Die monolithische Bauweise ist besonders vorteilhaft für den Wärmeübertrager, da auf diese Weise zusätzliche Materialien vermieden werden. Eine mehrteilige Herstellung ermöglicht den Einsatz von einfach herzustellenden Bauteilen wie beispielsweise Rohren mit rundem Querschnitt, was zu einer Reduzierung der Herstellungskosten führt.

Ist der Wärmeübertrager mehrteilig ausgebildet, so werden zumindest einzelne Teile oder Baugruppen bevorzugt monolithisch ausgebildet. Insbesondere können die Leitungen oder die Leitungen mit angrenzenden Gehäuseabschnitten oder die Leitungen gemeinsam mit dem Gehäuse oder die Leitungen gemeinsam mit dem Mittelteil und den Endstücken als Einheit monolithisch ausgebildet werden. Hierdurch wird der Montageaufwand reduziert. Dabei können der Sammler und der Verteiler nicht monolithisch mit den Leitungen hergestellt werden.

Besonders bevorzugt ist der Wärmeübertrager oder sind Teile oder Baugruppen des Wärmeübertragers mittels additiver Fertigung, insbesondere selektivem Lasersintern oder selektivem Laserschmelzen, hergestellt. Bei additiven Fertigungsverfahren wird ein herzustellender Körper schichtweise gefertigt. Diese Herstellung ist insbesondere für komplexe Bauteile geeignet. Es ist daher besonders vorteilhaft, wenn der Wärmeübertrager einteilig, nämlich monolithisch, mittels additiver Fertigung hergestellt wird.

Bei vorteilhaften Weiterbildungen weist der Wärmeübertrager Hilfsstrukturen, insbesondere in Form von Umlenkelementen, Oberflächenstrukturen und Verbindungselementen, auf. Oberflächenstrukturen können beispielsweise Nuten, Rippen, Vertiefungen oder Vorsprünge sein. Verbindungselemente können mehrere Leitungen untereinander oder eine oder mehrere Leitungen mit dem Gehäuse verbinden. Auf diese Weise kann bspw. die Oberfläche vergrößert, die Stabilität verbessert oder eine Oberfläche zur Aufbringung von Katalysatoren bereitet werden. Die Hilfsstrukturen sind bevorzugt monolithisch mit Teilen oder Baugruppen des Wärmeübertragers, insbesondere mit den Leitungen und/oder dem Gehäuse, ausgebildet. Durch die monolithische Herstellung, insbesondere mittels additiver Fertigung, ist ein gezieltes und präzise auf den jeweiligen Verwendungszweck des Wärmeübertragers abgestimmtes Vorsehen von Hilfsstrukturen möglich. Überflüssige Hilfsstrukturen können so vermieden werden, wodurch Material eingespart und eine verbesserte Wärmeübertragung erreicht wird. Hilfsstrukturen können in dem ersten Volumen, also innerhalb des Gehäuses, und/oder in dem zweiten Volumen, also innerhalb der Leitungen, vorgesehen werden.

Der erfindungsgemäße Reaktor weist einen Wärmeübertrager gemäß den obigen Ausführungen auf. Wahlweise in der zumindest einen Leitung, also im zweiten Volumen, oder außerhalb der zumindest einen Leitung in dem Gehäuse, also im verbleibenden ersten Volumen, ist ein Katalysatormaterial angeordnet, welches eine Reaktion in dem die Leitung bzw. das außerhalb der Leitung in dem Gehäuse durchströmenden reaktive Medium beschleunigt oder in Gang setzt. Das andere Medium durchströmt das jeweils andere Volumen als Wärmetransportmittel zwecks Wärmeab- oder -zufuhr zu dem reaktiven Medium. Der Wärmeübertrager gemäß den obigen Ausführungen wird in diesem Sinne bevorzugt als Reaktor verwendet.

Aus Handhabungsgründen besonders bevorzugt ist es, das Katalysatormaterial außerhalb der zumindest einen Leitung in dem Gehäuse anzuordnen, wenn dessen Ein- und Auslass größere Querschnitte aufweisen als die Öffnungen der Leitung(en). Dann ist es leichter, für das Ein- und Ausbringen des Katalysatormaterials den Einlass und/oder den Auslass des Gehäuses zu nutzen. Allerdings bestimmt nicht nur die Handhabung, sondern auch die Endo- oder Exothermie der Reaktion den Bedarf an Katalysatormaterial im Verhältnis zur Wärmeübertragung und somit die Wahl der Volumenverteilung auf das erste und das zweite Medium. Deshalb kann auch der umgekehrte Fall gewünscht sein, in dem das Katalysatormaterial in die Leitung(en) einzubringen ist. Das Katalysatormaterial kann als Schüttung eingebracht werden oder als Beschichtung der Oberflächen im Reaktor bzw. den Leitungen vorliegen. Eine Beschichtung kann beispielsweise über ein in der Veröffentlichung "R. Zapf, C. Becker-Willinger, K. Berresheim, H. Bolz, H. Gnaser, V. Hessel, G. Kolb, P. Löb, A-K. Pannwitt, A.Ziogas, Trans IChemE A, 81(2003) 721" beschriebenes Wash-Coating erfolgen.

Ein beispielhafter Anwendungsfall eines solchen Reaktors ist die Methanolherstellung. Das reaktive Medium besteht vor dem Einströmen in das wahlweise erste oder zweite Volumen aus einem Gemisch von Kohlenstoffmonoxid und Wasserstoff und nach der Reaktion, also beim Ausströmen aus dem ersten bzw. zweiten Volumen aus Methanol, jeweils von unvermeidbaren Verunreinigungen abgesehen. Das andere Medium ist dann ein Wärmetransportmittel, also beispielsweise Wasser oder Luft oder Thermoöl. Wahlweise können Kohlenstoffmonoxid und Wasserstoff übrigens auch separat zugeführt und erst in dem ersten oder zweiten Volumen gemischt werden. Es läge dann ein kombinierter Reaktor und Mischer vor. Dies erfordert allerdings einen komplizierteren und damit regelmäßig auch teureren Aufbau der Leitungs- und/oder Gehäusestruktur.

Die Erfindung wird nachfolgend anhand zweier Figuren beispielhaft dargestellt und erläutert. Es zeigen:
- Figur 1: eine Seitenansicht einer ersten Ausführungsform des Wärmeübertragers im Schnitt;
- Figur 2: eine Seitenansicht einer zweiten Ausführungsform des Wärmeübertragers im Teilschnitt.

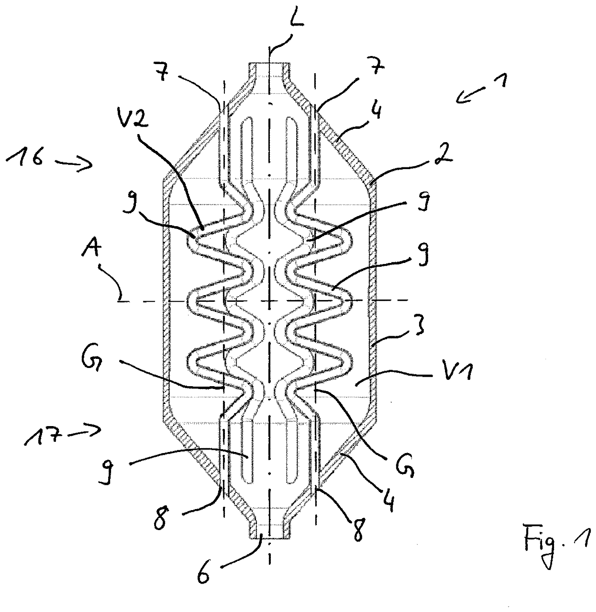

Der in Figur 1 dargestellte Wärmeübertrager 1 weist ein Gehäuse 2 mit einem Mittelteil 3 und zwei gegenüberliegenden Endstücken 4 auf. Das Gehäuse 2 weist einen Einlass und einen Auslass 6 auf, die jeweils in einem Endstück 4 angeordnet sind. Einlass und Auslass 6 sind bezüglich des Gehäuses 2 gegenüberliegend angeordnet. Zwischen dem Einlass und dem Auslass 6 verläuft eine Längsachse L des Gehäuses 2, die zugleich dessen Mittelachse und die Verbindungsgerade zwischen Einlass und einen Auslass 6 bildet. Das Mittelteil 3 und die Endstücke 4 sind demnach jeweils rotationssymmetrisch um die Längsachse L, das Mittelteil 3 also insbesondere zylindermantelförmig ausgebildet.

Das Gehäuse 2 definiert ein erstes Volumen V1.

Das Gehäuse 2 weist sechs erste Öffnungen 7 und sechs zweite Öffnungen 8 auf. Die ersten Öffnungen 7 sind bezüglich des Gehäuses 2 gegenüberliegend zu den zweiten Öffnungen 8 angeordnet. Von den ersten Öffnungen 7 und den zweiten Öffnungen 8 sind jeweils zwei im Schnitt erkennbar. Der Wärmeübertrager 1 weist sechs Leitungen 9 auf, von denen im Schnitt vier erkennbar sind (zwei davon geschnitten, zwei ungeschnitten). Jede Leitung 9 verläuft von der ihr zugeordneten ersten Öffnung 7 zu der ihr zugeordneten zweiten Öffnung 8 und verbindet diese. Die Leitungen 9 sind drehsymmetrisch um die Längsachse L angeordnet. Im Bereich der Öffnungen 7, 8 sind die Leitungen 9 mit dem Gehäuse 2 monolithisch verbunden. Die Leitungen 9 definieren ein gemeinsames zweites Volumen V2.

Zwischen den jeweils derselben Leitung 9 zugeordneten ersten Öffnungen 7 und zweiten Öffnungen 8 verlaufen Verbindungsgeraden G. Die Verbindungsgeraden G der verschiedenen Leitungen 9 sind alle parallel zu der Längsachse L.

Eine gedachte Fläche A, die senkrecht zu der Längsachse L angeordnet ist, unterteilt den Wärmeübertrager 1 in ein erstes Gehäuseteil 16 und ein zweites Gehäuseteil 17. Der Einlass und die ersten Öffnungen 7 sind in dem ersten Gehäuseteil 16, der Auslass 6 und die zweiten Öffnungen 8 sind in dem zweiten Gehäuseteil 17 angeordnet.

Bei bestimmungsgemäßem Gebrauch strömt ein erstes Medium von einem Bereich außerhalb des Gehäuses 2 durch den Einlass in das erste Volumen V1 und anschließend durch den Auslass 6 in einen Bereich außerhalb des Gehäuses 2. Aufgrund der drehsymmetrischen Anordnung und der kontinuierlichen Aufweitung und Verengung des Gehäuses 2 in Strömungsrichtung entlang der Verbindungsgeraden und Mittellinie L breitet sich das ersten Medium in dem ersten Volumen V1 nach dem Eintritt zunächst unter Verlangsamung der Strömungsgeschwindigkeit gleichmäßig und ohne Verwirbelungen aus und tritt nach der Reaktion und/oder Wärmeübertragung durch den Auslass 6 wieder beschleunigt aus dem Gehäuse 2 aus.

Durch die Leitungen 9 strömt im Betrieb gleichzeitig ein zweites Medium. In einer ersten Betriebsart strömt das zweite Medium von den ersten Öffnungen 7 in Richtung der zweiten Öffnungen 8. Bei dieser Betriebsart ist der Wärmeübertrager 1 ein Gleichstromwärmeübertrager, weil die Hauptströmungsrichtungen beider Medien parallel und gleichgerichtet sind. In einer zweiten Betriebsart strömt das zweite Medium von den zweiten Öffnungen 8 in Richtung der ersten Öffnungen 7. Bei dieser Betriebsart ist der Wärmeübertrager 1 ein Gegenstromwärmeübertrager, weil die Hauptströmungsrichtungen beider Medien parallel und entgegengerichtet sind.

Das erste Medium und das zweite Medium weisen vor dem Eintritt in das Gehäuse 2 bzw. in die Leitungen 9 eine unterschiedliche Temperatur auf. In dem Gehäuse 2 kommt es daher zu einem Wärmeübertrag von dem wärmeren Medium auf das kältere Medium.

Die Leitungen 9 verlaufen wellen- oder zick-zack-förmig und weisen abwechselnd gerade und gebogene Abschnitte auf. In einzelnen der Abschnitte verlaufen die Leitungen 9 deshalb auch quer zur Längsrichtung des Gehäuses 2 und damit zur Hauptströmungsrichtung entlang der Verbindungsgeraden G. Allerdings wechselt an keiner Stelle in den Leitungen 9 die Strömungsrichtung dergestalt, dass sie eine Komponente entgegen der Hauptströmungsrichtung aufweist. Anders gesagt, die Strömung verläuft an jeder Stelle in den Leitungen im Falle des Gleichstromwärmeübertragers von oben nach unten oder im Falle des Gegenstromwärmeübertrager umgekehrt. Dies stellt im Gegensatz zu einer auf- und-ab-Strömung, wie bspw. bei U-Rohrbündel-Wärmetauschern, eine bessere transversale Temperaturhomogenität und deshalb eine gleichmäßigere Temperaturanpassung in dem ersten Medium sicher.

Kommt es zu einer thermischen Ausdehnung einer Leitung 9 oder des Gehäuses 2, so können sich die Leitungen 9 aufgrund ihrer von der Geraden abweichenden Formgebung verformen, das heißt insbesondere in Richtung der Längsachse L relativ zu dem Gehäuse 2 auseinander- oder zusammenziehen und die Materialausdehnung dadurch ausgleichen.

Der Wärmeübertrager 1 kann mit einem katalytischen Material befüllt und als Reaktor verwendet werden. Das katalytische Material kann beispielsweise in Form einer Schüttung oder eines Granulats sowohl durch den Einlass und/oder den Auslass 6 in das Gehäuse 2 in das ersten Volumen V1 des Gehäuses 2 als auch durch die ersten und/oder zweiten Öffnungen 7, 8 in das zweiten Volumen V2 der Leitungen 9 eingebracht werden. Dies hängt, wie oben geschildert, zum einen von der Handhabung und zum anderen von der Endo- oder Exothermie der Reaktion ab.

Auch ist das Katalysatormaterial in Form einer dünnen Schicht auf eine Innenoberfläche des Wärmeübertragers einbringbar. Dies ist insbesondere dann gut möglich, wenn die zu beschichtende Oberfläche groß ist, wie im Fall der Gehäuseinnenwand und/oder vieler Leitungsaußenoberflächen. Die einzelnen Oberflächen können zum Zweck der Oberflächenvergrößerung vorteilhafter Weise zusätzlich strukturiert sein.

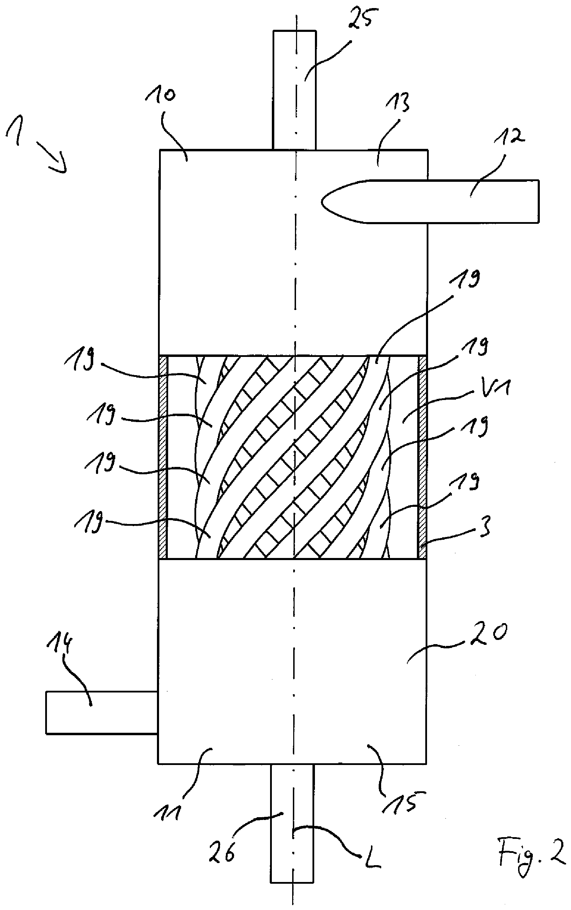

Die zweite Ausführungsform des Wärmeübertrager 1 gemäß Figur 2 weist im Unterschied zur ersten Ausführungsform eine Mehrzahl von helixförmigen Leitungen 19 auf. Die Leitungen 19 sind in einem Gehäuse 20 angeordnet, das im Teilschnitt dargestellt ist. Das Gehäuse 20 weist endseitig einen Verteiler 10 und einen Sammler 11 auf. Verteiler 10 und Sammler 11 sind bezüglich des Gehäuses 20 gegenüberliegend angeordnet. Die Leitungen 19 sind über nicht dargestellte erste Öffnungen mit dem Verteiler 10 und über nicht dargestellte zweite Öffnungen mit dem Sammler 11 fluidisch verbunden.

Der Verteiler 10 ist zylinderförmig und weist eine Zuführung 12 für das zweite Medium auf. Mit Ausnahme der Zuführung 12, die tangential zur Mantelfläche 13 des Verteilers 10 angeordnet ist, ist der Verteiler 10 rotationssymmetrisch zur Längsachse L des Gehäuses 20.

Der Sammler 11 ist zylinderförmig und weist eine Abführung 14 für das zweite Medium auf. Auch die Abführung 14 ist tangential zur Mantelfläche 15 des Sammlers 11 angeordnet, der im Übrigen rotationssymmetrisch zur Längsachse L des Gehäuses 20 ist.

Ansonsten ist auch das Gehäuse 20 wieder rotationssymmetrisch zur Längsachse oder Mittelachse L aufgebaut, die zugleich auch wieder die Verbindungsgerade zwischen Einlass 25 und einen Auslass 26 bildet.

So wird das zweite Medium bei diesem weitestgehend um die Längsachse L drehsymmetrischen Aufbau gleichmäßig auf alle Leitungen 19 verteilt, weil es tangential eingeleitet wird. Und auch das erste Medium strömt weiterhin gleichmäßig verteilt in das erste Volumen V1 ein, weil es diesem weiterhin durch die zentralen Endabschnitte mittig zugeführt wird.

Die Forschungsarbeiten, die zu diesen Ergebnissen geführt haben, wurden von der Europäischen Union gefördert.

### Bezugszeichenliste

- 1: Wärmeübertrager
- 2: Gehäuse
- 3: Mittelteil
- 4: Endstück
- 6: Auslass
- 7: erste Öffnung
- 8: zweite Öffnung
- 9: Leitung

- 10: Verteiler
- 11: Sammler
- 12: Zuführung
- 13: erste Mantelfläche
- 14: Abführung
- 15: zweite Mantelfläche
- 16: erstes Gehäuseteil
- 17: zweites Gehäuseteil
- 19: Leitung
- 20: Gehäuse
- 25: Einlass
- 26: Auslass

- A: Fläche
- G: Verbindungsgerade
- L: Längs-, Mittelachse
- V1: erstes Volumen
- V2: zweites Volumen

## Patentansprüche

1. Wärmeübertrager (1) mit einem ein erstes Volumen (V1) definierenden Gehäuse (2, 20) und zumindest einer ein zweites Volumen (V2) definierenden Leitung (9, 19), wobei das Gehäuse (2, 20) einen Einlass (5, 25) und einen Auslass (6, 26) sowie zumindest eine erste Öffnung (7) und zumindest eine der ersten Öffnung (7) bezüglich des Gehäuses (2, 20) gegenüberliegende zweite Öffnung (8) aufweist, wobei die zumindest eine Leitung (9, 19) die zumindest eine erste Öffnung (7) des Gehäuses (2, 20) und die zumindest eine zweite Öffnung (8) des Gehäuses (2, 20) durch das erste Volumen (V1) verlaufend miteinander verbindet und an ihren beiden Enden mit dem Gehäuse (2, 20) fluiddicht verbunden ist, wobei die zumindest eine Leitung (9, 19) innerhalb des ersten Volumens (V1) nicht linear verläuft und im Bereich ihrer ersten Öffnung (7) und/oder ihrer zweiten Öffnung (8) mit dem Gehäuse (2, 20) monolithisch verbunden ist, wobei die monolithisch ausgebildeten Elemente mittels additiver Fertigung hergestellt sind,
**dadurch gekennzeichnet, dass** die zumindest eine Leitung (9, 19) zumindest teilweise wellenförmig und/oder helixförmig und/oder zickzackförmig verläuft.

2. Wärmeübertrager (1) nach Anspruch 1,
**dadurch gekennzeichnet, dass** mehrere Leitungen (9, 19) vorgesehen sind, die gemeinsam mit dem Gehäuse (2, 20) monolithisch ausgebildet werden.

3. Wärmeübertrager (1) nach einem der vorhergehenden Ansprüche,
**dadurch gekennzeichnet, dass** das Gehäuse (2, 20) einen, insbesondere zylindermantelförmigen, Mittelteil (3) und zwei gegenüberliegende Endstücke (4) aufweist, wobei der Einlass (5, 25) und die zumindest eine erste Öffnung (7) an dem einen Endstück (4) und der Auslass (6, 26) und die zumindest eine zweite Öffnung (8) an dem anderen Endstück (4) angeordnet sind.

4. Wärmeübertrager (1) nach Anspruch 3,
**dadurch gekennzeichnet, dass** mehrere Leitungen (9, 19) vorgesehen sind, die gemeinsam mit dem Mittelteil (3) und den Endstücken (4) als Einheit monolithisch ausgebildet werden.

5. Wärmeübertrager (1) nach einem der vorhergehenden Ansprüche,
**dadurch gekennzeichnet, dass** das Gehäuse (2, 20) eine Längsachse (L) aufweist und eine Mehrzahl von Leitungen (9, 19) drehsymmetrisch um die Längsachse (L) des Gehäuses (2, 20) angeordnet ist.

6. Wärmeübertrager (1) nach einem der vorhergehenden Ansprüche,
**dadurch gekennzeichnet, dass** das Querschnittsprofil der zumindest einen Leitung (9, 19) entlang ihres Verlaufs variiert.

7. Wärmeübertrager (1) nach einem der vorhergehenden Ansprüche,
**dadurch gekennzeichnet, dass** eine Mehrzahl von Leitungen (9, 19) vorgesehen ist und der Wärmeübertrager (1) zumindest einen Sammler (11) und/oder einen Verteiler (10) aufweist, wobei die Leitungen (9, 19) mit dem Sammler (11) über die zumindest eine erste Öffnung (7) und/oder dem Verteiler (10) über die zumindest eine zweite Öffnung (8) in fluidischer Verbindung stehen.

8. Wärmeübertrager (1) nach Anspruch 7,
**dadurch gekennzeichnet, dass** das Gehäuse (2, 20) eine Längsachse (L) aufweist und der Sammler (11) und/oder der Verteiler (10) eine Zuführung (12) oder Abführung (14) aufweist, wobei die Zuführung (12) und/oder die Abführung (14) tangential zu einem gedachten Kreis um die Längsachse (L) des Gehäuses (2, 20) angeordnet ist.

9. Wärmeübertrager (1) nach einem der vorhergehenden Ansprüche,
**gekennzeichnet durch** in dem ersten Volumen (V1) und/oder dem zweiten Volumen (V2) angeordnete Hilfsstrukturen, insbesondere in Form von Umlenkelementen, Oberflächenstrukturen und Verbindungselementen.

10. Reaktor mit einem Wärmeübertrager (1) gemäß einem der vorhergehenden Ansprüche, wobei ein Katalysatormaterial in der zumindest einen Leitung (9, 19) oder außerhalb der zumindest einen Leitung (9, 19) in dem Gehäuse (2, 20) angeordnet ist.

11. Verwendung des Wärmeübertragers (1) gemäß einem der Ansprüche 1 bis 9 als Reaktor.

## Claims

1. Heat exchanger (1) having a housing (2, 20) which defines a first volume (V1) and at least one line (9, 19) which defines a second volume (V2), wherein the housing (2, 20) has an inlet (5, 25) and an outlet (6, 26) and at least a first opening (7) and at least a second opening (8) which is opposite the first opening (7) with respect to the housing (2, 20), wherein the at least one line (9, 19) connects the at least one first opening (7) of the housing (2, 20) and the at least one second opening (8) of the housing (2, 20) so as to extend through the first volume (V1) and is connected at the two ends thereof to the housing (2, 20) in a fluid-tight manner, wherein the at least one line (9, 19) does not extend in a linear manner within the first volume (V1) and is connected in the region of the first opening (7) thereof and/or the second opening (8) thereof to the housing (2, 20) in a monolithic manner, wherein the elements which are constructed in a monolithic manner are produced by means of additive production,
**characterised in that** the at least one line (9, 19) extends at least partially in an undulating and/or helical and/or zig-zag manner.

2. Heat exchanger (1) according to claim 1,
**characterized in that** there are provided a plurality of lines (9, 19) which are constructed together with the housing (2, 20) in a monolithic manner.

3. Heat exchanger (1) according to either of the preceding claims, **characterised in that** the housing (2, 20) has an in particular cylinder-cover-like central portion (3) and two opposing end pieces (4), wherein the inlet (5, 25) and the at least one first opening (7) are arranged on one end piece (4) and the outlet (6, 26) and the at least one second opening (8) are arranged on the other end piece (4).

4. Heat exchanger (1) according to claim 3,
**characterised in that** there are provided a plurality of lines (9, 19) which together with the central portion (3) and the end pieces (4) are constructed as a unit in a monolithic manner.

5. Heat exchanger (1) according to any one of the preceding claims,
**characterised in that** the housing (2, 20) has a longitudinal axis (L) and a plurality of lines (9, 19) are arranged in a rotationally symmetrical manner about the longitudinal axis (L) of the housing (2, 20).

6. Heat exchanger (1) according to any one of the preceding claims, **characterised in that** the cross-sectional profile of the at least one line (9, 19) varies over the extent thereof.

7. Heat exchanger (1) according to any one of the preceding claims, **characterised in that** a plurality of lines (9, 19) are provided and the heat exchanger (1) has at least one collector (11) and/or a distributor (10), wherein the lines (9, 19) are connected in fluid terms to the collector (11) via at least a first opening (7) and/or the distributor (10) via the at least one second opening (8).

8. Heat exchanger (1) according to claim 7,
**characterised in that** the housing (2, 20) has a longitudinal axis (L) and the collector (11) and/or the distributor (10) has/have a supply (12) or discharge (14), wherein the supply (12) and/or the discharge (14) is/are arranged tangentially with respect to a notional circle about the longitudinal axis (L) of the housing (2, 20).

9. Heat exchanger (1) according to any one of the preceding claims, **characterised by** auxiliary structures which are arranged in the first volume (V1) and/or in the second volume (V2), in particular in the form of redirection elements, surface structures and connection elements.

10. Reactor having a heat exchanger (1) according to any one of the preceding claims, wherein a catalyst material is arranged in the at least one line (9, 19) or outside the at least one line (9, 19) in the housing (2, 20).

11. Use of the heat exchanger (1) according to any one of claims 1 to 9 as a reactor.

## Revendications

1. Échangeur de chaleur (1) doté d'un boîtier (2, 20) définissant un premier volume (V1) et d'au moins une conduite (9, 19) définissant un deuxième volume (V2), dans lequel le boîtier (2, 20) comporte une entrée (5, 25) et une sortie (6, 26) ainsi qu'au moins une première ouverture (7) et au moins une deuxième ouverture (8) opposée à la première ouverture (7) par rapport au boîtier (2, 20), dans lequel l'au moins une conduite (9, 19) relie l'une à l'autre à travers le premier volume (V1) l'au moins une première ouverture (7) et l'au moins une deuxième ouverture (8) du boîtier (2, 20) et est reliée à ses deux extrémités au boîtier (2, 20) de manière étanche au fluide, dans lequel l'au moins une conduite (9, 19) s'étend de manière non linéaire à l'intérieur du premier volume (V1) et est reliée de manière monolithique au boîtier (2, 20) dans la zone de sa première ouverture (7) et/ou de sa deuxième ouverture (8), dans lequel les éléments réalisés de manière monolithique sont créés par fabrication additive,
**caractérisé en ce que** l'au moins une conduite (9, 19) est au moins partiellement ondulée et/ou hélicoïdale et/ou en zigzag.

2. Échangeur de chaleur (1) selon la revendication 1,
**caractérisé en ce que** plusieurs conduites (9, 19) sont prévues, lesquelles sont réalisées de manière monolithique avec le boîtier (2, 20).

3. Échangeur de chaleur (1) selon l'une des revendications précédentes,
**caractérisé en ce que** le boîtier (2, 20) comporte une partie médiane (3), en particulier en forme d'enveloppe de cylindre, et deux pièces d'extrémité (4) opposées, dans lequel l'entrée (5, 25) et l'au moins une première ouverture (7) sont disposées sur l'une pièce d'extrémité (4) et la sortie (6, 26) et l'au moins une deuxième ouverture (8) sont disposées sur l'autre pièce d'extrémité (4).

4. Échangeur de chaleur (1) selon la revendication 3,
**caractérisé en ce que** plusieurs conduites (9, 19) sont prévues, lesquelles sont réalisées de manière monolithique en tant qu'unité avec la partie médiane (3) et les pièces d'extrémité (4).

5. Échangeur de chaleur (1) selon l'une des revendications précédentes,
**caractérisé en ce que** le boîtier (2, 20) comporte un axe longitudinal (L) et une pluralité de conduites (9, 19) est disposée en symétrie de rotation autour de l'axe longitudinal (L) du boîtier (2, 20).

6. Échangeur de chaleur (1) selon l'une des revendications précédentes,
**caractérisé en ce que** le profil de section transversale de l'au moins une conduite (9, 19) varie le long de son étendue.

7. Échangeur de chaleur (1) selon l'une des revendications précédentes,
**caractérisé en ce qu'**une pluralité de conduites (9, 19) est prévue et l'échangeur de chaleur (1) comporte au moins un collecteur (11) et/ou un distributeur (10), dans lequel les conduites (9, 19) sont en liaison fluidique avec le collecteur (11) par le biais de l'au moins une première ouverture (7) et/ou le distributeur (10) par le biais de l'au moins une deuxième ouverture (8).

8. Échangeur de chaleur (1) selon la revendication 7,
**caractérisé en ce que** le boîtier (2, 20) comporte un axe longitudinal (L) et le collecteur (11) et/ou le distributeur (10) comporte une arrivée (12) ou une évacuation (14), dans lequel l'arrivée (12) et/ou l'évacuation (14) est disposée tangentiellement à un cercle imaginaire autour de l'axe longitudinal (L) du boîtier (2, 20).

9. Échangeur de chaleur (1) selon l'une des revendications précédentes, **caractérisé par** des structures auxiliaires disposées dans le premier volume (V1) et/ou le deuxième volume (V2), en particulier sous la forme d'éléments de déviation, de structures de surface et d'élément de liaison.

10. Réacteur doté d'un échangeur de chaleur (1) conforme à l'une des revendications précédentes, dans lequel un matériau catalyseur est disposé dans l'au moins une conduite (9, 19) ou dans le boîtier (2, 20) à l'extérieur de l'au moins une conduite (9, 19).

11. Utilisation de l'échangeur de chaleur (1) conforme à l'une des revendications 1 à 9 en tant que réacteur.
